# EUROPEAN PATENT SPECIFICATION

(11) **EP 4 147 936 B1**
(45) Date of publication and mention of the grant of the patent: **08.05.2024**
(21) Application number: 22213176.5
(22) Date of filing: 13.12.2022
(51) Int. Cl.: B60W 60/00, B60W 30/095

(54) **DRIVE WITH CAUTION UNDER UNCERTAINTY FOR AN AUTONOMOUS DRIVING VEHICLE**
FAHRANTRIEB MIT UNSICHERHEITSWARNUNG FÜR EIN AUTONOM FAHRENDES FAHRZEUG
ENTRAÎNEMENT AVEC AVERTISSEMENT SOUS INCERTITUDE POUR UN VÉHICULE À CONDUITE AUTONOME

(30) Priority: 23.12.2021 US 202117561503
(43) Date of publication of application: 15.03.2023
(73) Proprietor: Baidu USA LLC, Sunnyvale, California 94089 (US)
(72) Inventor: JIANG, Shu, Sunnyvale, 94089 (US); CAO, Yu, Sunnyvale, 94089 (US); LIN, Weiman, Sunnyvale, 94089 (US); HU, Jiangtao, Sunnyvale, 94089 (US); MIAO, Jinghao, Sunnyvale, 94089 (US)
(74) Representative: advotec.

(56) References cited:
- WO-A1-2021/017504
- DE-A1-102019 114 737
- DE-A1-102019 122 250
- US-A1- 2020 307 561
- US-B1- 9 248 834

## Description

### TECHNICAL FIELD

Embodiments of the invention relate generally to operating autonomous driving vehicles. More particularly, embodiments of the invention relate to how to drive with caution under uncertainty for an autonomous driving vehicle (ADV).

### BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

Motion planning and control are critical operations in autonomous driving. However, in certain situations, the driving environment may not be clear, and the prediction of the movement of the obstacle may be uncertain. It is difficult to plan the trajectory of the ADV to avoid a collision with the obstacle.

DE102019122250 A1 discloses a method of controlling a motor vehicle traveling on a road in a current lane, the road having at least one other lane contiguous to the current lane of the motor vehicle is suggested. The method includes the following steps: a traffic development distribution is generated and/or received, which contains information about the respective probability of various possible developments in a current traffic situation. Possible driving maneuvers for the motor vehicle are determined based on the traffic development distribution. One of the determined driving maneuvers is selected at least based on the traffic development distribution.

DE102019114737A1 discloses a device for predicting the behavior of a road user in a traffic situation is described. The device is set up to determine feature values for a large number of features at a point in time. Furthermore, the device is set up to use at least one neural network to predict an action by the road user, the neural network being designed to record the feature values for the plurality of features as input values of the neural network and to provide the action of the road user as an output value of the neural network .

### SUMMARY

In one aspect of the invention, there is provided a computer-implemented method for operating an autonomous driving vehicle (ADV), the method including:
detecting an obstacle based on sensor data obtained from a plurality of sensors of the ADV;
predicting multiple trajectories of the obstacle with corresponding probabilities including a first predicted trajectory of the obstacle with a highest probability and a second predicted trajectory of the obstacle with a second highest probability;
planning a cautionary trajectory of the ADV based on at least one of a difference between the highest probability and the second highest probability or a consequence of the second predicted trajectory, wherein the ADV is to drive with a speed lower than a speed limit and prepare to stop in the cautionary trajectory; and
controlling the ADV to drive according to the cautionary trajectory.

In another aspect of the invention, there is provided a non-transitory machine-readable medium having instructions stored therein, which when executed by a processor, cause the processor to perform operations of the method described above.

In another aspect of the invention, there is provided a data processing system, including a processor and a memory coupled to the processor to store instructions, which when executed by the processor, cause the processor to perform operations of the method described above.

According to the invention, the uncertainty from prediction may be handled with caution and the safety of the driving of the ADV may be improved.

### BRIEF DESCRIPTION OF THE DRAWINGS

Embodiments of the invention are illustrated by way of example and not limitation in the figures of the accompanying drawings in which like references indicate similar elements.
Figure 1 is a block diagram illustrating a networked system according to one embodiment.
Figure 2 is a block diagram illustrating an example of an autonomous driving vehicle according to one embodiment.
Figures 3A-3B are block diagrams illustrating an example of an autonomous driving system used with an autonomous driving vehicle according to one embodiment.
Figure 4 is a block diagram illustrating an example of a predication module of an autonomous driving vehicle according to one embodiment.
Figure 5 is a block diagram illustrating an example of a planning module of an autonomous driving vehicle according to one embodiment.
Figure 6 illustrates an example of driving with caution under uncertainty for operating an autonomous driving vehicle according to one embodiment.
Figure 7 is a block diagram illustrating an example of driving with caution under uncertainty for operating an autonomous driving vehicle according to one embodiment.
Figure 8 is a flow diagram illustrating an example of a process for driving with caution under uncertainty for operating an ADV according to one embodiment.

### DETAILED DESCRIPTION

Various embodiments and aspects of the invention will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the invention. However, in certain instances, well-known or conventional details are not described in order to provide a concise discussion of embodiments of the invention.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

According to some embodiments, when the driving environment is not clear, and the prediction of the movement of the obstacle is uncertain, it is important to adopt a caution way to drive. This invention provides a way to handle the uncertainty from prediction and make the driving safe. Multiple trajectories of the obstacle are predicted with corresponding probabilities, for example, a first trajectory with a highest probability, a second trajectory with a second highest probability, etc. If the difference between the highest probability and the second highest probability is very small, below a first threshold, the ADV drives with caution, with a speed lower than the speed limit and prepare to stop at any moment. In addition, if the difference between the highest probability and the second highest probability is not very small but small enough, above the first threshold but below a second threshold, however, the damage or consequence of the second trajectory is high, such as a collision, the ADV also drives with caution, with the speed lower than the speed limit and prepare to stop at any moment.

According to some embodiments, an obstacle is detected based on sensor data obtained from a plurality of sensors of the ADV. Multiple trajectories of the obstacle are predicted with corresponding probabilities including a first predicted trajectory of the obstacle with a highest probability and a second predicted trajectory of the obstacle with a second highest probability. A cautionary trajectory of the ADV is planned based on at least one of a difference between the highest probability and the second highest probability or a consequence of the second trajectory. The ADV is to drive with a speed lower than a speed limit and prepare to stop in the cautionary trajectory. The ADV is controlled to drive according to the cautionary trajectory.

In one embodiment, whether a difference between the highest probability and the second highest probability is below a first predetermined threshold may be determined.

In one embodiment, it may be determined to plan the cautionary trajectory of the ADV in response to the difference between the highest probability and the second highest probability is below a first predetermined threshold.

In one embodiment, whether a difference between the highest probability and the second highest probability is above a first predetermined threshold and below a second predetermined threshold and the consequence of the second predicted trajectory includes a collision may be determined.

In one embodiment, it may be determined to plan the cautionary trajectory of the ADV in response to the difference between the highest probability and the second highest probability above a first predetermined threshold and below a second predetermined threshold and the consequence of the second predicted trajectory includes a collision.

In one embodiment, for each trajectory of the multiple trajectories of the obstacle, a consequence of a trajectory may be determined

In one embodiment, the first predicted trajectory with the highest probability and the second predicted trajectory with the second highest probability may be updated, it may be determined not to plan the cautionary trajectory of the ADV based on at least one of a difference between the updated highest probability and the updated second highest probability or a consequence of the updated second predicted trajectory.

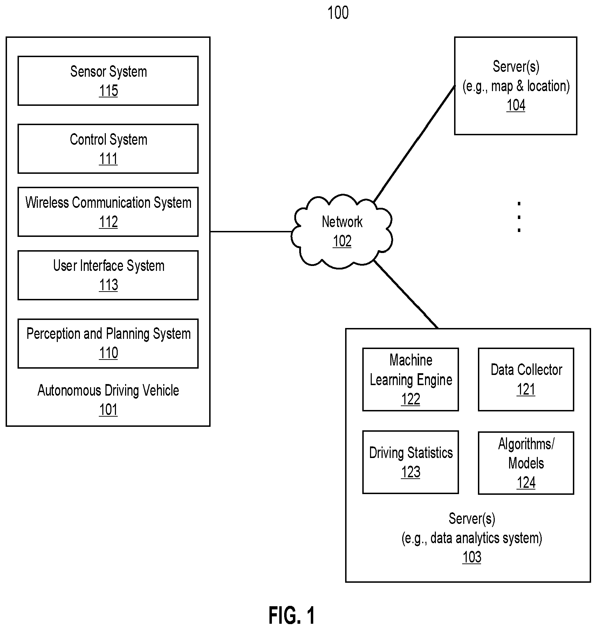

Figure 1 is a block diagram illustrating an autonomous driving network configuration according to one embodiment of the invention. Referring to Figure 1, network configuration 100 includes autonomous driving vehicle (ADV) 101 that may be communicatively coupled to one or more servers 103-104 over a network 102. Although there is one ADV shown, multiple ADVs can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) servers, or location servers, etc.

An ADV refers to a vehicle that can be configured to in an autonomous mode in which the vehicle navigates through an environment with little or no input from a driver. Such an ADV can include a sensor system having one or more sensors that are configured to detect information about the environment in which the vehicle operates. The vehicle and its associated controller(s) use the detected information to navigate through the environment. ADV 101 can operate in a manual mode, a full autonomous mode, or a partial autonomous mode.

In one embodiment, ADV 101 includes, but is not limited to, autonomous driving system (ADS) 110, vehicle control system 111, wireless communication system 112, user interface system 113, and sensor system 115. ADV 101 may further include certain common components included in ordinary vehicles, such as, an engine, wheels, steering wheel, transmission, etc., which may be controlled by vehicle control system 111 and/or ADS 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

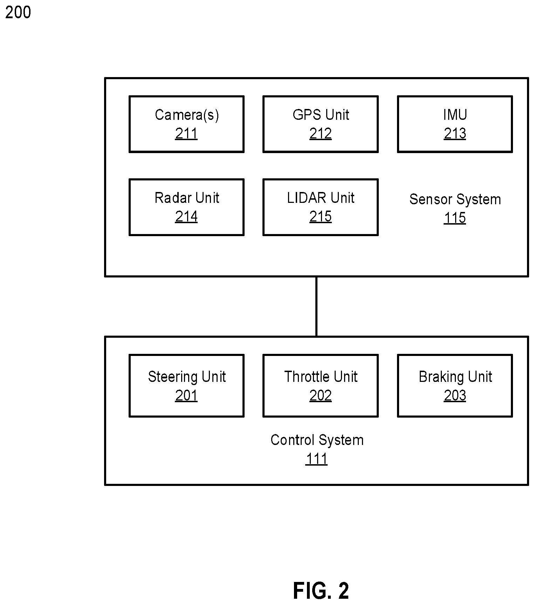

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the ADV. IMU unit 213 may sense position and orientation changes of the ADV based on inertial acceleration. Radar unit 214 may represent a system that utilizes radio signals to sense objects within the local environment of the ADV. In some embodiments, in addition to sensing objects, radar unit 214 may additionally sense the speed and/or heading of the objects. LIDAR unit 215 may sense objects in the environment in which the ADV is located using lasers. LIDAR unit 215 could include one or more laser sources, a laser scanner, and one or more detectors, among other system components. Cameras 211 may include one or more devices to capture images of the environment surrounding the ADV. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the ADV. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn controls the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between ADV 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of ADV 101 may be controlled or managed by ADS 110, especially when operating in an autonomous driving mode. ADS 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, ADS 110 may be integrated with vehicle control system 111.

For example, a user as a passenger may specify a starting location and a destination of a trip, for example, via a user interface. ADS 110 obtains the trip related data. For example, ADS 110 may obtain location and route data from an MPOI server, which may be a part of servers 103-104. The location server provides location services and the MPOI server provides map services and the POIs of certain locations. Alternatively, such location and MPOI information may be cached locally in a persistent storage device of ADS 110.

While ADV 101 is moving along the route, ADS 110 may also obtain real-time traffic information from a traffic information system or server (TIS). Note that servers 103-104 may be operated by a third party entity. Alternatively, the functionalities of servers 103-104 may be integrated with ADS 110. Based on the real-time traffic information, MPOI information, and location information, as well as real-time local environment data detected or sensed by sensor system 115 (e.g., obstacles, objects, nearby vehicles), ADS 110 can plan an optimal route and drive vehicle 101, for example, via control system 111, according to the planned route to reach the specified destination safely and efficiently.

Server 103 may be a data analytics system to perform data analytics services for a variety of clients. In one embodiment, data analytics system 103 includes data collector 121 and machine learning engine 122. Data collector 121 collects driving statistics 123 from a variety of vehicles, either ADVs or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc.

Based on driving statistics 123, machine learning engine 122 generates or trains a set of rules, algorithms, and/or predictive models 124 for a variety of purposes. In one embodiment, algorithms 124 may include an algorithm or model to detect an obstacle based on sensor data obtained from a plurality of sensors of the ADV, an algorithm or model to predict multiple trajectories of the obstacle with corresponding probabilities including a first predicted trajectory of the obstacle with a highest probability and a second predicted trajectory of the obstacle with a second highest probability, an algorithm or model to plan a cautionary trajectory of the ADV based on at least one of a difference between the highest probability and the second highest probability or a consequence of the second trajectory, where the ADV is to drive with a speed lower than a speed limit and prepare to stop in the cautionary trajectory, and/or an algorithm or model to control the ADV to drive according to the cautionary trajectory. Algorithms 124 can then be uploaded on ADVs to be utilized during autonomous driving in real-time.

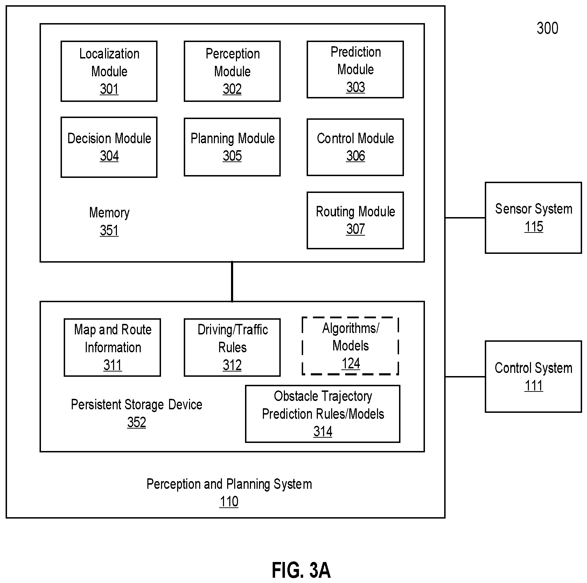

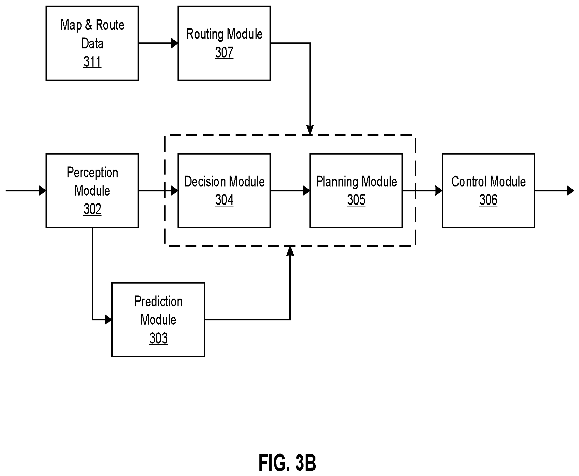

Figures 3A and 3B are block diagrams illustrating an example of an autonomous driving system used with an ADV according to one embodiment. System 300 may be implemented as a part of ADV 101 of Figure 1 including, but is not limited to, ADS 110, control system 111, and sensor system 115. Referring to Figures 3A-3B, ADS 110 includes, but is not limited to, localization module 301, perception module 302, prediction module 303, decision module 304, planning module 305, control module 306, routing module 307.

Some or all of modules 301-307 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-307 may be integrated together as an integrated module.

Localization module 301 determines a current location of ADV 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of ADV 300, such as map and route data 311, to obtain the trip related data. For example, localization module 301 may obtain location and route data from a location server and a map and POI (MPOI) server. A location server provides location services and an MPOI server provides map services and the POIs of certain locations, which may be cached as part of map and route data 311. While ADV 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 302 may include a computer vision system or functionalities of a computer vision system to process and analyze images captured by one or more cameras in order to identify objects and/or features in the environment of the ADV. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a leftturn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal routes in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time.

Based on a decision for each of the objects perceived, planning module 305 plans a path or route for the ADV, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 miles per hour (mph), then change to a right lane at the speed of 25 mph.

Based on the planning and control data, control module 306 controls and drives the ADV, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, steering commands) at different points in time along the path or route.

In one embodiment, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the ADV. For example, the navigation system may determine a series of speeds and directional headings to affect movement of the ADV along a path that substantially avoids perceived obstacles while generally advancing the ADV along a roadway-based path leading to an ultimate destination. The destination may be set according to user inputs via user interface system 113. The navigation system may update the driving path dynamically while the ADV is in operation. The navigation system can incorporate data from a GPS system and one or more maps so as to determine the driving path for the ADV.

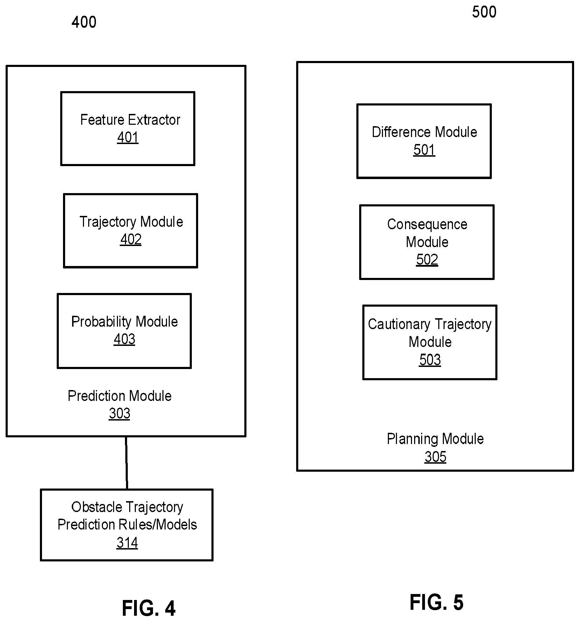

Figure 4 is a block diagram 400 illustrating an example of a predication module of an autonomous driving vehicle according to one embodiment. Referring to Figure 4, prediction module 303 includes, but is not limited to, feature extractor 401, trajectory module 402, and probability module 403, which work together using obstacle trajectory prediction rules/models 314 to predict multiple trajectories of the obstacle with corresponding probabilities including a first predicted trajectory of the obstacle with a highest probability and a second predicted trajectory of the obstacle with a second highest probability. Note that modules 401-403 may be integrated into fewer number of modules or a single module.

According to one embodiment, the obstacle such as a vehicle is identified and detected. The obstacle is detected as a part of perception process performed by perception module 302 based on sensor data obtained from various sensors mounted on an ADV such as the sensors as shown in Figure 2. Based on the perception information, feature extractor 401 is configured to extract the features of the obstacle. Alternatively, the features of the obstacle are extracted and provided by perception module 302. An obstacle/object may be a vehicle, motorcycle, bicycle, pedestrian, or animal.

According to one embodiment, trajectory module 402 may predict multiple trajectories of the obstacle including the first predicted trajectory, the second predicted trajectory, the third predicted trajectory, etc.

According to one embodiment, probability module 403 may determine the corresponding probabilities of the multiple trajectories of the obstacle including the highest probability, the second highest probability, the third highest probability, etc.

In one embodiment, prediction module 303 outputs the multiple trajectories of the obstacle with corresponding probabilities to planning module 305. In one embodiment, prediction module 303 may output the top two or the top three trajectories of the obstacle with the highest probability, the second highest probability, and the third highest probability to planning module 305.

Figure 5 is a block diagram 500 illustrating an example of a planning module of an autonomous driving vehicle according to one embodiment. Referring to Figure 5, planning module 305 includes, but is not limited to, difference module 501, consequence module 502 and cautionary trajectory module 503, which work together to plan a cautionary trajectory of the ADV based on at least one of a difference between the highest probability and the second highest probability or a consequence of the second trajectory, where the ADV is to drive with a speed lower than a speed limit and prepare to stop in the cautionary trajectory. Note that modules 501-503 may be integrated into fewer number of modules or a single module.

In one embodiment, difference module 501 may determine whether a difference between the highest probability and the second highest probability is below a first predetermined threshold.

In one embodiment, cautionary trajectory module 503 may determine to plan the cautionary trajectory of the ADV in response to the difference between the highest probability and the second highest probability is below a first predetermined threshold.

In one embodiment, consequence module 502 may determine, for each trajectory of the multiple trajectories of the obstacle, a consequence of a trajectory.

In one embodiment, difference module 501 may determine whether a difference between the highest probability and the second highest probability is above a first predetermined threshold and below a second predetermined threshold, and consequence module 502 may determine the consequence of the second predicted trajectory includes a collision may be determined.

In one embodiment, cautionary trajectory module 503 may determine to plan the cautionary trajectory of the ADV in response to the difference between the highest probability and the second highest probability above a first predetermined threshold and below a second predetermined threshold and the consequence of the second predicted trajectory includes a collision.

In one embodiment, cautionary trajectory module 503 may determine not to plan the cautionary trajectory of the ADV based on at least one of a difference between the updated highest probability and the updated second highest probability or a consequence of the updated second predicted trajectory.

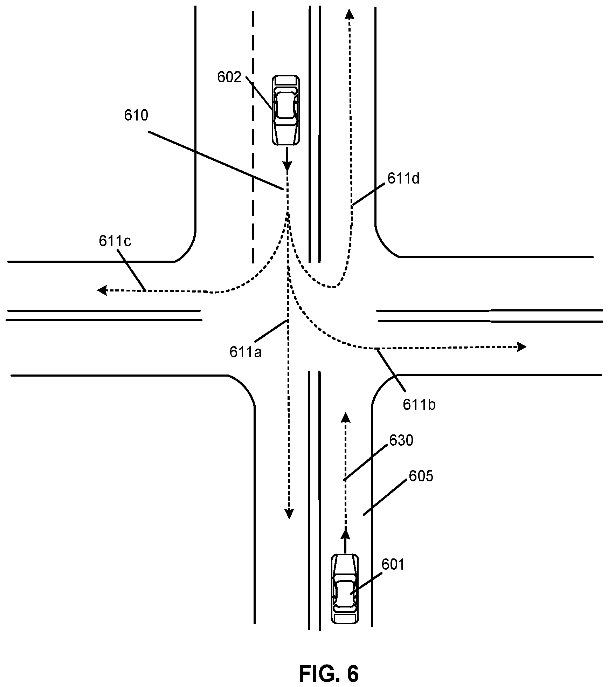

Figure 6 illustrates an example of driving with caution under uncertainty for operating an autonomous driving vehicle 601 according to one embodiment. The ADV 601 may drive in a crowded area. The driving environment of the ADV 601 may not be clear. The prediction of a movement of the obstacle 602 may be uncertain. The obstacle 602 may follow multiple trajectories (611a, 611b, 611c, 611d). The obstacle 602 may continue to go straight in a trajectory 611a, or make a left turn in a trajectory 611b, or make a right turn in a trajectory 611c, or make a U-turn in a trajectory 611d.

Currently, a prediction module of an ADV only outputs a trajectory of an obstacle with the highest probability to a planning module of the ADV. However, because of the uncertainty in the prediction, the obstacle 602 may end up to follow another trajectory not with the highest probability. The ADV may not have enough time to stop in time. A collision between the ADV and the obstacle may happen. Thus, a cautionary trajectory may need to be planned to increase the safely of driving and prevent the collision.

Referring to FIG. 6, the ADV 601 may be driving on a lane 605. The perception module of the ADV 601 may detect an obstacle 602, e.g., a moving vehicle, driving on a lane 610, which is a lane adjacent to the lane 605 for vehicles to drive in an opposite direction of the ADV 601. The prediction module (e.g., 303) of the ADV 601 predicts multiple trajectories (611a, 611b, 611c, 611d) of the obstacle 602 with corresponding probabilities. For example, the prediction module of the ADV 601 may predict the obstacle 602 may continue to go straight in a trajectory 611a, or make a left turn in a trajectory 611b, or make a right turn in a trajectory 611c, or make a U-turn in a trajectory 611d.

The prediction module of the ADV 601 also predicts the corresponding probabilities of the multiple trajectories (611a, 61 1b, 611c, 611d). The corresponding probabilities of the multiple trajectories (611a, 611b, 611c, 611d) may be predicted based on the history of the obstacle, the driving environment, etc.

As an example, the corresponding probabilities of the multiple trajectories (611a, 611b, 611c, 611d) may be 45%, 40%, 10%, and 5% for trajectories 611a, 611b, 611c, 611d, respective, as illustrated in Table 1 below. When a difference between the highest probability of the first trajectory 611a and the second highest probability of the second trajectory 611b is very small, below a first predetermined threshold, there may be uncertainty in the prediction of the movement of the obstacle 602.

**Table 1**

| Predicted Trajectory | Probability |
|---|---|
| 611a | 45% |
| 611b | 40% |
| 611c | 10% |
| 611d | 5% |

As another example, the corresponding probabilities of the multiple trajectories (611a, 611b, 611c, 611d) may be 50%, 35%, 10%, and 5% for trajectories 611a, 611b, 611c, 611d, respective, as illustrated in Table 2 below.

**Table 2**

| Predicted Trajectory | Probability |
|---|---|
| 611a | 50% |
| 611b | 35% |
| 611c | 10% |
| 611d | 5% |

As illustrated in Table 2, the difference between the highest probability of the first trajectory 611a and the second highest probability of the second trajectory 611b may be not very small, above a first predetermined threshold, but still small enough, below a second predetermined threshold. However, the consequence of the second trajectory 611b may involve a high damage, such as a collision of the obstacle 602 with the ADV 601. In this situation, a cautionary trajectory of the ADV 601 may be need to prevent the collision.

Instead of only outputting the first trajectory 611a with the highest probability, the prediction module (e.g., 303) of the ADV may output the multiple trajectories (611a, 611b, 611c, 611d) with the corresponding probabilities to the planning module (e.g., 305) of the ADV 601. In some embodiments, the prediction module (e.g., 303) of the ADV may output several selected trajectories of the multiple trajectories (611a, 611b, 611c, 611d) with the corresponding probabilities to the planning module (e.g., 305) of the ADV 601. For example, the prediction module (e.g., 303) of the ADV may select the top two, three, four or five trajectories of the multiple trajectories with the top two, three, four, or five highest probabilities to the planning module (e.g., 305) of the ADV 601.

The planning module (e.g., 305) of the ADV 601 plans a cautionary trajectory 630 of the ADV 601 based on the difference between the highest probability and the second highest probability or a consequence of the second trajectory. In the cautionary trajectory 630, the ADV 601 is configured to drive slowly, with a speed lower than a speed limit, and prepare to apply the brake to stop at any moment.

In one embodiment, the planning module (e.g., 305) of the ADV 601 may determine whether the difference between the highest probability of the first trajectory 611a and the second highest probability of the first trajectory 611b is below a first predetermined threshold. In response to the difference between the highest probability and the second highest probability is below the first predetermined threshold, the planning module (e.g., 305) of the ADV 601 may determine to plan the cautionary trajectory 630. As an example, the first predetermined threshold may be 10%. As illustrated in Table 1, the difference between the highest probability of the first trajectory 611a and the second highest probability of the second trajectory 611b may be 5%, less than 10%, the planning module (e.g., 305) of the ADV 601 may determine to plan the cautionary trajectory 630. Please note that the first predetermined threshold may be any predetermined value, not be limited by the example.

In one embodiment, the planning module (e.g., 305) of the ADV 601 may determine whether the difference between the highest probability of the first trajectory 611a and the second highest probability of the second trajectory 611b is above the first predetermined threshold and below a second predetermined threshold, and the consequence of the second predicted trajectory includes a high damage, such as a collision. In response to determining that the difference between the highest probability of the first trajectory 611a and the second highest probability of the second trajectory 611b is above the first predetermined threshold and below a second predetermined threshold, and the consequence of the second predicted trajectory includes the high damage, such as the collision, the planning module (e.g., 305) of the ADV 601 may determine to plan the cautionary trajectory 630. As an example, the first predetermined threshold may be 10%, and the second predetermined threshold may be 20%. Please note that the first predetermined threshold and the second predetermined threshold may be any predetermined value, not be limited by the example. As illustrated in Table 2, the difference between the highest probability of the first trajectory 611a and the second highest probability of the second trajectory 611b may be 15%, above 10% but less than 20%, however, the consequence of the second predicted trajectory 611b may include the collision, the planning module (e.g., 305) of the ADV 601 may determine to plan the cautionary trajectory 630.

In one embodiment, the planning module (e.g., 305) of the ADV 601 may determine whether the consequence of at least one of the top two, three, four or five trajectories of the multiple trajectories with the top two, three, four, or five highest probabilities includes a collision, and determine to plan the cautionary trajectory 630 in response to determining that the consequence of at least one of the top two, three, four or five trajectories of the multiple trajectories with the top two, three, four, or five highest probabilities includes a collision. For example, if the consequence of the second predicted trajectory with the second highest probability, or the consequence of the third predicted trajectory with the third highest probability, or the fourth predicted trajectory with the fourth highest probability, or the fifth predicted trajectory with the fifth highest probability may include a collision, the planning module (e.g., 305) of the ADV 601 may determine to plan the cautionary trajectory 630.

The prediction module (e.g., 303) may update the multiple trajectories (611a, 611b, 611c, 611d) with the corresponding probabilities, e.g., constantly, and output the updated the updated multiple trajectories with the corresponding probabilities. As time goes by, the driving environment may become more clear, and the uncertainty may become less. For example, the probability of the first trajectory 611a may become 70%, the probability of the second trajectory 611b may become 40%, the probability of the third trajectory 611c and the probability of the fourth trajectory 611d may become 0%. Thus, the planning module (e.g., 305) of the ADV 601 may determine not to plan the cautionary trajectory 630, but resume to plan a typical trajectory.

In this way, the uncertainty from prediction may be handled with caution and the safety of the driving of the ADV may be improved.

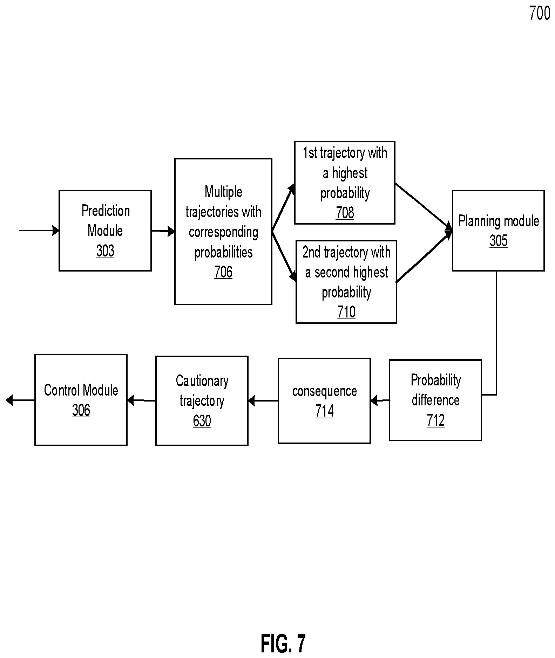

Figure 7 is a block diagram illustrating an example of driving with caution under uncertainty for operating an autonomous driving vehicle according to one embodiment.

When the driving environment of the ADV is not clear, the prediction of a movement of an obstacle may be uncertain. Prediction module 303 of the ADV predicts multiple trajectories with corresponding probabilities 706, including the first trajectory with the highest probability 708 and the second trajectory with the second highest probability 710. Planning module 305 of the ADV may determine whether to plan a cautionary trajectory of the ADV based on at least one of a difference between the highest probability and the second highest probability 712 or a consequence of the second trajectory 714.

In one embodiment, planning module 305 of the ADV may determine to plan the cautionary trajectory 630 when the difference between the highest probability and the second highest probability is below the first predetermined threshold. In one embodiment, planning module 305 of the ADV may determine to plan the cautionary trajectory 630 when the difference between the highest probability and the second highest probability 712 is above a first predetermined threshold but below a second predetermined threshold and the consequence of the second trajectory 714 includes a collision.

Control module 306 may drive the ADV according to the cautionary trajectory 630. In this way, the ADV may handle the uncertainty from prediction and drive safely to prevent the collision.

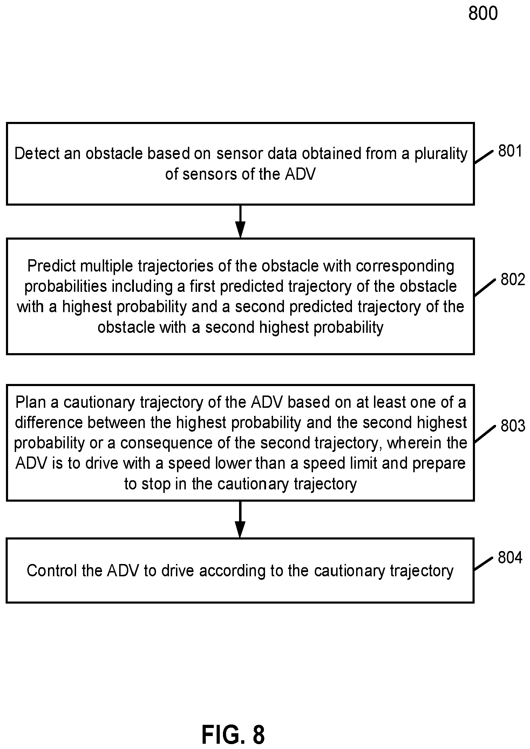

Figure 8 is a flow diagram illustrating an example of a process 800 for driving with caution under uncertainty for operating an ADV according to one embodiment. Process 800 may be performed by processing logic which may include software, hardware, or a combination thereof. For example, process 800 may be performed by prediction module 303 and planning module 305.

Referring to Figure 8, in operation 801, processing logic detects an obstacle based on sensor data obtained from a plurality of sensors of the ADV. For example, the processing logic may perceive a driving environment surrounding the ADV based on sensor data obtained from various sensors mounted on the ADV (e.g., LIDAR, RADAR, cameras) and generates perception data describing the driving environment. The processing logic may detect the obstacle based on the perception data.

In operation 802, the processing logic predicts multiple trajectories of the obstacle with corresponding probabilities including a first predicted trajectory of the obstacle with a highest probability and a second predicted trajectory of the obstacle with a second highest probability.

In operation 803, the processing logic plans a cautionary trajectory of the ADV based on at least one of a difference between the highest probability and the second highest probability or a consequence of the second trajectory. The ADV is to drive with a speed lower than a speed limit and prepare to stop in the cautionary trajectory.

In operation 804, the processing logic controls the ADV to drive according to the cautionary trajectory. In this way, the uncertainty from prediction may be handled with caution and the safety of the driving of the ADV may be improved.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the invention also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computerreadable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the invention are not described with reference to any particular programming language. It will be appreciated that a variety of programming languages may be used to implement the teachings of embodiments of the invention as described herein.

In the foregoing specification, embodiments of the invention have been described with reference to specific exemplary embodiments thereof. It will be evident that various modifications may be made thereto without departing from the broader scope of the invention as set forth in the following claims. The specification and drawings are, accordingly, to be regarded in an illustrative sense rather than a restrictive sense.

## Claims

1. A computer-implemented method for operating an autonomous driving vehicle (ADV), the method comprising:
detecting an obstacle (602) based on sensor data obtained from a plurality of sensors of the ADV (601) (801);
predicting multiple trajectories (611a, 611b, 611c, 611d) of the obstacle (602) with corresponding probabilities including a first predicted trajectory of the obstacle (602) with a highest probability and a second predicted trajectory of the obstacle (602)with a second highest probability (802);
planning a cautionary trajectory (630) of the ADV (601) based on at least one of a difference between the highest probability and the second highest probability or a consequence of the second predicted trajectory, wherein the ADV (601) is to drive with a speed lower than a speed limit and prepare to stop in the cautionary trajectory (630) (803); and
controlling the ADV (601) to drive according to the cautionary trajectory (630) (804).

2. The method of claim 1, further comprising determining whether a difference between the highest probability and the second highest probability is below a first predetermined threshold.

3. The method of claim 2, further comprising determining to plan the cautionary trajectory (630) of the ADV (601) in response to determining that the difference between the highest probability and the second highest probability is below a first predetermined threshold.

4. The method of claim 1, further comprising determining whether a difference between the highest probability and the second highest probability is above a first predetermined threshold and below a second predetermined threshold and the consequence of the second predicted trajectory includes a collision.

5. The method of claim 4, further comprising determining to plan the cautionary trajectory (630) of the ADV (601) in response to determining that the difference between the highest probability and the second highest probability above a first predetermined threshold and below a second predetermined threshold and the consequence of the second predicted trajectory includes a collision.

6. The method of any of claims 1-5, further comprising
updating the first predicted trajectory of the obstacle (602) with the highest probability and the second predicted trajectory of the obstacle (602) with the second highest probability;
determining not to plan the cautionary trajectory (630) of the ADV (601) based on at least one of a difference between the updated highest probability and the updated second highest probability or a consequence of the updated second predicted trajectory.

7. The method of any of claims 1-6, further comprising, for each trajectory of the multiple trajectories (611a, 611b, 611c, 611d) of the obstacle (602), determining a consequence of a trajectory of the obstacle (602).

8. A non-transitory machine-readable medium having instructions stored therein, which when executed by a processor, cause the processor to perform operations of the method of any of claims 1-7.

9. A data processing system, comprising:
a processor; and
a memory coupled to the processor to store instructions, which when executed by the processor, cause the processor to perform operations, the operations including detecting an obstacle (602) based on sensor data obtained from a plurality of sensors of the ADV (601);
predicting multiple trajectories (611a, 611b, 611c, 611d) of the obstacle (602) with corresponding probabilities including a first predicted trajectory of the obstacle with a highest probability and a second predicted trajectory of the obstacle (602) with a second highest probability;
planning a cautionary trajectory (630) of the ADV (601) based on at least one of a difference between the highest probability and the second highest probability or a consequence of the second predicted trajectory, wherein
the ADV (601) is to drive with a speed lower than a speed limit and prepare to stop in the cautionary trajectory (630); and
controlling the ADV (601) to drive according to the cautionary trajectory (630).

10. The data processing system of claim 9, wherein the operations further comprise determining whether a difference between the highest probability and the second highest probability is below a first predetermined threshold.

11. The data processing system of claim 10, wherein the operations further comprise determining to plan the cautionary trajectory (630) of the ADV (601) in response to determining that the difference between the highest probability and the second highest probability is below the first predetermined threshold

12. The data processing system of claim 9, wherein the operations further comprise determining whether a difference between the highest probability and the second highest probability is above a first predetermined threshold and below a second predetermined threshold and the consequence of the second predicted trajectory includes a collision.

13. The data processing system of claim 12, wherein the operations further comprise determining to plan the cautionary trajectory (630) of the ADV (601) in response to determining that the difference between the highest probability and the second highest probability above a first predetermined threshold and below a second predetermined threshold and the consequence of the second predicted trajectory includes a collision.

14. The data processing system of any of claims 9-13, wherein the operations further comprise
updating the first predicted trajectory of the obstacle (602)with the highest probability and the second predicted trajectory of the obstacle (602) with the second highest probability;
determining not to plan the cautionary trajectory (630) of the ADV (601) based on at least one of a difference between the updated highest probability and the updated second highest probability or a consequence of the updated second predicted trajectory.

15. The data processing system of any of claims 9-14, wherein the operations further comprise, for each trajectory of the multiple trajectories (611a, 611b, 611c, 611d) of the obstacle (602), determining a consequence of a trajectory of the obstacle (602).

## Patentansprüche

1. Computerimplementiertes Verfahren zum Betreiben eines autonom fahrenden Fahrzeugs (ADV), umfassend:
Erkennen eines Hindernisses (602) auf Basis von von einer Vielzahl von Sensoren des ADV (601) erhaltenen Sensordaten (801);
Vorhersagen mehrerer Bewegungsbahnen (611a, 611b, 611c, 611d) des Hindernisses (602) mit entsprechenden Wahrscheinlichkeiten, umfassend eine erste vorhergesagte Bewegungsbahn des Hindernisses (602) mit einer höchsten Wahrscheinlichkeit und eine zweite vorhergesagte Bewegungsbahn des Hindernisses (602) mit einer zweithöchsten Wahrscheinlichkeit (802);
Planen einer Sicherheitsbewegungsbahn (630) des ADV (601) auf Basis einer Differenz zwischen der höchsten Wahrscheinlichkeit und der zweithöchsten Wahrscheinlichkeit und/oder auf Basis einer Konsequenz der zweiten vorhergesagten Bewegungsbahn, wobei das ADV (601) mit einer Geschwindigkeit unterhalb einer erlaubten Höchstgeschwindigkeit fahren und sich auf ein Anhalten auf der Sicherheitsbewegungsbahn (630) vorbereiten soll (803); und
Steuern des ADV (601) derart, dass es der Sicherheitsbewegungsbahn (630) folgt (804).

2. Verfahren nach Anspruch 1, des Weiteren umfassend: Feststellen, ob eine Differenz zwischen der höchsten Wahrscheinlichkeit und der zweithöchsten Wahrscheinlichkeit unterhalb einer ersten vorbestimmten Schwelle liegt.

3. Verfahren nach Anspruch 2, des Weiteren umfassend: Bestimmen, die Sicherheitsbewegungsbahn (630) des ADV (601) zu planen, wenn festgestellt wurde, dass die Differenz zwischen der höchsten Wahrscheinlichkeit und der zweithöchsten Wahrscheinlichkeit unterhalb einer ersten vorbestimmten Schwelle liegt.

4. Verfahren nach Anspruch 1, des Weiteren umfassend: Feststellen, ob eine Differenz zwischen der höchsten Wahrscheinlichkeit und der zweithöchsten Wahrscheinlichkeit oberhalb einer ersten vorbestimmten Schwelle und unterhalb einer zweiten vorbestimmten Schwelle liegt und die Konsequent der zweiten vorhergesagten Bewegungsbahn eine Kollision umfasst.

5. Verfahren nach Anspruch 4, des Weiteren umfassend: Bestimmen, die Sicherheitsbewegungsbahn (630) des ADV (601) zu planen, wenn festgestellt wurde, dass die Differenz zwischen der höchsten Wahrscheinlichkeit und der zweithöchsten Wahrscheinlichkeit oberhalb einer ersten vorbestimmten Schwelle und unterhalb einer zweiten vorbestimmten Schwelle liegt und die Konsequenz der zweiten vorhergesagten Bewegungsbahn eine Kollision umfasst.

6. Verfahren nach einem der Ansprüche 1 bis 5, des Weiteren umfassend:
Aktualisieren der ersten vorhergesagten Bewegungsbahn des Hindernisses (602) mit der höchsten Wahrscheinlichkeit und der zweiten vorhergesagten Bewegungsbahn des Hindernisses (602) mit der zweithöchsten Wahrscheinlichkeit;
Bestimmen, die Sicherheitsbewegungsbahn (630) des ADV (601) nicht zu planen, auf Basis einer Differenz zwischen der aktualisierten höchsten Wahrscheinlichkeit und der aktualisierten zweithöchsten Wahrscheinlichkeit und/oder auf Basis einer Konsequenz der aktualisierten zweiten vorhergesagten Bewegungsbahn.

7. Verfahren nach einem der Ansprüche 1 bis 6, des Weiteren umfassend: Bestimmen einer Konsequenz einer Bewegungsbahn des Hindernisses (602) für jede Bewegungsbahn der mehreren Bewegungsbahnen (611a, 611b, 611c, 611d) des Hindernisses (602).

8. Nichtflüchtiges maschinenlesbares Medium mit darauf gespeicherten Anweisungen, durch welche bei Ausführung durch einen Prozessor der Prozessor zur Durchführung von Schritten des Verfahrens nach einem der Ansprüche 1 bis 7 veranlassbar ist.

9. Datenverarbeitungssystem, umfassend:
einen Prozessor; und
einen mit dem Prozessor gekoppelten Speicher zur Speicherung von Anweisungen, durch welche der Prozessor bei Ausführung durch den Prozessor zur Durchführung von Schritten veranlassbar ist, wobei die Schritte Folgendes umfassen:
Erkennen eines Hindernisses (602) auf Basis von von einer Vielzahl von Sensoren des ADV (601) erhaltenen Sensordaten;
Vorhersagen mehrerer Bewegungsbahnen (611a, 611b, 611c, 611d) des Hindernisses (602) mit entsprechenden Wahrscheinlichkeiten, umfassend eine erste vorhergesagte Bewegungsbahn des Hindernisses mit einer höchsten Wahrscheinlichkeit und eine zweite vorhergesagte Bewegungsbahn des Hindernisses (602) mit einer zweithöchsten Wahrscheinlichkeit;
Planen einer Sicherheitsbewegungsbahn (630) des ADV (601) auf Basis einer Differenz zwischen der höchsten Wahrscheinlichkeit und der zweithöchsten Wahrscheinlichkeit und/oder auf Basis einer Konsequenz der zweiten vorhergesagten Bewegungsbahn, wobei das ADV (601) mit einer Geschwindigkeit unterhalb einer erlaubten Höchstgeschwindigkeit fahren und sich auf ein Anhalten auf der Sicherheitsbewegungsbahn (630) vorbereiten soll; und
Steuern des ADV (601) derart, dass es der Sicherheitsbewegungsbahn (630) folgt.

10. Datenverarbeitungssystem nach Anspruch 9, wobei die Schritte des Weiteren Folgendes umfassen: Feststellen, ob eine Differenz zwischen der höchsten Wahrscheinlichkeit und der zweithöchsten Wahrscheinlichkeit unterhalb einer ersten vorbestimmen Schwelle liegt.

11. Datenverarbeitungssystem nach Anspruch 10, wobei die Schritte des Weiteren Folgendes umfassen: Bestimmen, die Sicherheitsbewegungsbahn (630) des ADV (601) zu planen, wenn festgestellt wurde, dass die Differenz zwischen der höchsten Wahrscheinlichkeit und der zweithöchsten Wahrscheinlichkeit unterhalb der ersten vorbestimmten Schwelle liegt.

12. Datenverarbeitungssystem nach Anspruch 9, wobei die Schritte des Weiteren Folgendes umfassen: Feststellen, ob eine Differenz zwischen der höchsten Wahrscheinlichkeit und der zweithöchsten Wahrscheinlichkeit oberhalb einer ersten vorbestimmten Schwelle und unterhalb einer zweiten vorbestimmten Schwelle liegt und die Konsequenz der zweiten vorhergesagten Bewegungsbahn eine Kollision umfasst.

13. Datenverarbeitungssystem nach Anspruch 12, wobei die Schritte des Weiteren Folgendes umfassen: Bestimmen, die Sicherheitsbewegungsbahn (630) des ADV (601) zu planen, wenn festgestellt wurde, dass die Differenz zwischen der höchsten Wahrscheinlichkeit und der zweithöchsten Wahrscheinlichkeit oberhalb einer ersten vorbestimmten Schwelle und unterhalb einer zweiten vorbestimmten Schwelle liegt und die Konsequenz der zweiten vorhergesagten Bewegungsbahn eine Kollision umfasst.

14. Datenverarbeitungssystem nach einem der Ansprüche 9 bis 13, wobei die Schritte des Weiteren Folgendes umfassen:
Aktualisieren der ersten vorhergesagten Bewegungsbahn des Hindernisses (602) mit der höchsten Wahrscheinlichkeit und der zweiten vorhergesagten Bewegungsbahn des Hindernisses (602) mit der zweithöchsten Wahrscheinlichkeit;
Bestimmen, die Sicherheitsbewegungsbahn (630) des ADV (601) nicht zu planen, auf Basis einer Differenz zwischen der aktualisierten höchsten Wahrscheinlichkeit und der aktualisierten zweithöchsten Wahrscheinlichkeit und/oder auf Basis einer Konsequenz der aktualisierten zweiten vorhergesagten Bewegungsbahn.

15. Datenverarbeitungssystem nach einem der Ansprüche 9 bis 14, wobei die Schritte des Weiteren Folgendes umfassen: Bestimmen einer Konsequenz einer Bewegungsbahn des Hindernisses (602) für jede Bewegungsbahn der mehreren Bewegungsbahnen (611a, 611b, 611c, 611d) des Hindernisses (602).

## Revendications

1. Procédé implémenté par ordinateur pour faire fonctionner un véhicule autonome (ADV), le procédé comprenant les étapes consistant à :
détecter un obstacle (602) sur la base de données de capteur obtenues d'une pluralité de capteurs de l'ADV (601)(801) ;
prédire plusieurs trajectoires (611a, 611b, 611c, 611d) de l'obstacle (602) avec des probabilités correspondantes, y compris une première trajectoire prédite de l'obstacle (602) avec une probabilité la plus élevée et une deuxième trajectoire prédite de l'obstacle (602) avec une probabilité la deuxième plus élevée (802) ;
prévoir une trajectoire prudente (630) de l'ADV (601) sur la base d'au moins une parmi une différence entre la probabilité la plus élevée et la probabilité la deuxième plus élevée ou une conséquence de la deuxième trajectoire prédite, dans lequel l'ADV (601) doit rouler à une vitesse inférieure à une limite de vitesse et préparer à arrêter sur la trajectoire prudente (630)(803) ; et
commander l'ADV (601) de sorte qu'il roule selon la trajectoire prudente (630)(804).

2. Procédé selon la revendication 1, comprenant en outre l'étape consistant à déterminer si une différence entre la probabilité la plus élevée et la probabilité la deuxième plus élevée est inférieure à un premier seuil prédéterminé.

3. Procédé selon la revendication 2, comprenant en outre l'étape consistant à déterminer que la trajectoire prudente (630) de l'ADV (601) doit être prévue en réponse à la détermination que la différence entre la probabilité la plus élevée et la probabilité la deuxième plus élevée est inférieure à un premier seuil prédéterminé.

4. Procédé selon la revendication 1, comprenant en outre l'étape consistant à déterminer si une différence entre la probabilité la plus élevée et la probabilité la deuxième plus élevée est supérieure à un premier seuil prédéterminé et inférieure à un deuxième seuil prédéterminé et la conséquence de la deuxième trajectoire prédite comprend une collision.

5. Procédé selon la revendication 4, comprenant en outre l'étape consistant à déterminer que la trajectoire prudente (630) de l'ADV (601) doit être prévue en réponse à la détermination que la différence entre la probabilité la plus élevée et la probabilité la deuxième plus élevée est supérieure à un premier seuil prédéterminé et inférieure à un deuxième seuil prédéterminé et la conséquence de la deuxième trajectoire prédite comprend une collision.

6. Procédé selon l'une quelconque des revendications 1 à 5, comprenant en outre les étapes consistant à
actualiser la première trajectoire prédite de l'obstacle (602) avec la probabilité la plus élevée et la deuxième trajectoire prédite de l'obstacle (602) avec la probabilité la deuxième plus élevée ;
déterminer que la trajectoire prudente (630) de l'ADV (601) ne doit pas être prévue sur la base d'au moins une parmi une différence entre la probabilité la plus élevée actualisée et la probabilité la deuxième plus élevée actualisée ou une conséquence de la deuxième trajectoire prédite actualisée.

7. Procédé selon l'une quelconque des revendications 1 à 6, comprenant en outre l'étape consistant à, pour chaque trajectoire des plusieurs trajectoires (611a, 611b, 611c, 611d) de l'obstacle (602), déterminer une conséquence d'une trajectoire de l'obstacle (602).

8. Support non-transitoire lisible par machine ayant stocké sur celui-ci des instructions qui, lors de l'exécution par un processeur, amènent le processeur à effectuer des étapes du procédé selon l'une quelconque des revendications 1 à 7.

9. Système de traitement de données comprenant :
un processeur ; et
une mémoire couplée au processeur pour stocker des instructions, qui, lors de l'exécution par le processeur, amènent le processeur à effectuer des étapes, les étapes comprenant les étapes consistant à
détecter un obstacle (602) sur la base de données de capteur obtenues d'une pluralité de capteurs de l'ADV (601) ;
prédire plusieurs trajectoires (611a, 611b, 611c, 611d) de l'obstacle (602) avec des probabilités correspondantes, y compris une première trajectoire prédite de l'obstacle avec une probabilité la plus élevée et une deuxième trajectoire prédite de l'obstacle (602) avec une probabilité la deuxième plus élevée ;
prévoir une trajectoire prudente (630) de l'ADV (601) sur la base d'au moins une parmi une différence entre la probabilité la plus élevée et la probabilité la deuxième plus élevée ou une conséquence de la deuxième trajectoire prédite, dans lequel l'ADV (601) doit rouler à une vitesse inférieure à une limite de vitesse et préparer à arrêter sur la trajectoire prudente (630) ; et
commander l'ADV (601) de sorte qu'il roule selon la trajectoire prudente (630).

10. Système de traitement de données selon la revendication 9, dans lequel les étapes comprennent en outre l'étape consistant à déterminer si une différence entre la probabilité la plus élevée et la probabilité la deuxième plus élevée est inférieure à un premier seuil prédéterminé.

11. Système de traitement de données selon la revendication 10, dans lequel les étapes comprennent en outre l'étape consistant à déterminer que la trajectoire prudente (630) de l'ADV (601) doit être prévue en réponse à la détermination que la différence entre la probabilité la plus élevée et la probabilité la deuxième plus élevée est inférieure au premier seuil déterminé.

12. Système de traitement de données selon la revendication 9, dans lequel les étapes comprennent en outre l'étape consistant à déterminer si une différence entre la probabilité la plus élevée et la probabilité la deuxième plus élevée est supérieure à un premier seuil prédéterminé et inférieure à un deuxième seuil prédéterminé et la conséquence de la deuxième trajectoire prédite comprend une collision.

13. Système de traitement de données selon la revendication 12, dans lequel les étapes comprennent en outre l'étape consistant à déterminer que la trajectoire prudente (630) de l'ADV (601) doit être prévue en réponse à la détermination que la différence entre la probabilité la plus élevée et la probabilité la deuxième plus élevée est supérieure à un premier seuil prédéterminé et inférieure à un deuxième seuil prédéterminé et la conséquence de la deuxième trajectoire prédite comprend une collision.

14. Système de traitement de données selon l'une quelconque des revendications 9 à 13, dans lequel les étapes comprennent en outre les étapes consistant à actualiser la première trajectoire prédite de l'obstacle (602) avec la probabilité la plus élevée et la deuxième trajectoire prédite de l'obstacle (602) avec la probabilité la deuxième plus élevée ;
déterminer que la trajectoire prudente (630) de l'ADV (601) ne doit pas être prévue sur la base d'au moins une parmi une différence entre la probabilité la plus élevée actualisée et la probabilité la deuxième plus élevée actualisée ou une conséquence de la deuxième trajectoire prédite actualisée.

15. Système de traitement de données selon l'une quelconque des revendications 9 à 14, dans lequel les étapes comprennent en outre l'étape consistant à, pour chaque trajectoire des plusieurs trajectoires (611a, 611b, 611c, 611d) de l'obstacle (602), déterminer une conséquence d'une trajectoire de l'obstacle (602).
